# EUROPEAN PATENT SPECIFICATION

(11) **EP 4 091 007 B1**
(45) Date of publication and mention of the grant of the patent: **20.08.2025**
(21) Application number: 21707769.2
(22) Date of filing: 18.01.2021
(51) Int. Cl.: G02B 6/38, G02B 6/44, G02B 6/50

(54) **PRECONNECTORIZED MULTI-FIBER DROP CABLES**
VORKONFEKTIONIERTE MEHRFASERIGE VERBINDUNGSKABEL
CÂBLES DE DÉRIVATION À FIBRES MULTIPLES PRÉ-ÉQUIPÉS DE CONNECTEURS

(30) Priority: 17.01.2020 US 202062962663 P
(43) Date of publication of application: 23.11.2022
(73) Proprietor: PPC Broadband Fiber Ltd., Framlingham, Woodbridge IP13 9EZ (GB)
(72) Inventor: LEESON, Kim, Ipswich IP3 0PA (GB); TREZISE, Shaun, Aldeburgh IP3 0PA (GB)
(74) Representative: PGA S.p.A., Milano, Succursale di Lugano
(86) International application number: PCT/IB2021/000010
(87) International publication number: WO 2021/144650

(56) References cited:
- EP-A1- 1 783 523
- EP-A1- 3 734 339
- WO-A1-2019/131098
- US-A1- 2014 133 808

## Description

### BACKGROUND

The present disclosure relates to preconnectorized multi-fiber drop cables, for example, multi-fiber drop cables having fibers terminated with an LC (Lucent Connector) connector sub-assembly. More particularly, the disclosure relates to preconnectorized LC duo and LC quattro drop cables and methods for deploying the preconnectorized LC duo and LC quattro drop cables.

The mechanical tolerances involved in terminating single mode optical fiber are much tighter than those for multimode optical fiber. Therefore, while it is quite common for multimode optical fiber to be terminated at the point of use, for example, at a user's premises or at an outside junction box, in most product applications, single mode optical fiber is not terminated in the field. When single mode fiber must be terminated in the field, then it can take a skilled technician between about 15 to 20 minutes to splice fibers together either by using a V-groove clamp or expensive fusion welding equipment.

Single mode fiber is therefore often provided in a range of different lengths, pre-terminated at both ends with a connector that is configured to be connected with an outer housing after the pre-terminated end is deployed to its desired location. The pre-terminated end and housing is then ready to plug into a matching receptacle.

One example of such a connector is an LC connector. The LC connector and adapters were originally developed by Lucent Technologies. The LC connector is a miniaturized version of the fiber optic SC (Subscriber Connector) connector, thus being also known as a small form factor connector. The LC connector looks somewhat similar to the SC connector, but is about half the size with a 1.25mm ferrule instead of a 2.5mm ferrule. LC connectors are typically composed of a plastic housing with an RJ45 push-pull style clip.

Conventional optical fiber LC connectors comprise a rigid pushable structure to allow for limited movement of the connector parts while being pushed down stretches of a duct. However, some conventional fiber optic cables include more than one fiber. For example, some fiber optic cables include two, four, or more fibers.

Conventional optical fiber LC connectors and LC connector sub-assemblies are not necessarily designed to minimize a cross-sectional footprint and, therefore, it is difficult to push multiple preconnectorized fibers of a multi-fiber cable through a duct simultaneously.

Therefore, it may be desirable to provide a preconnectorized multi-fiber drop cables having a minimal cross-sectional footprint so that the multiple fibers can be easily and smoothly pushed through a duct.

Document WO2019131098A1 discloses an optical connector comprising a ferrule basket having four flat portions and curved portions in between.

Document EP1783523A1 discloses an optical fibre alignment apparatus directed to receive optical ferrules having asymmetric key collars comprising three flat key faces.

Document US2014133808A1 discloses an optical fiber connector having a small footprint

### SUMMARY

A multi-fiber drop cable according to the invention is disclosed in any one of claims 1-5.

According to various aspects, an LC connector includes the aforementioned optical fiber connector sub-assembly and an outer housing configured to be coupled with the optical fiber connector sub-assembly. The outer housing is configured to provide LC-style push/pull engagement/disengagement with a mating optical fiber socket.

In accordance with some aspects, a multi-fiber drop cable includes a plurality of fibers terminated with the aforementioned optical fiber connector sub-assembly.

### BRIEF DESCRIPTION OF THE DRAWINGS

Embodiments of the invention will now be further described, by way of example only, and with reference to the accompanying drawings, in which:
FIG. 1 is a perspective view of an exemplary LC connector in accordance with various aspects of the disclosure;
FIG. 2 is a perspective view of the outer housing of the exemplary LC connector of FIG. 1
FIGS. 3A and 3B are side and front views of two LC connector sub-assemblies in accordance with various aspects of the disclosure;
FIGS. 4A and 4B are side and front view of four LC connector sub-assemblies in accordance with various aspects of the disclosure;
FIGS. 5A-5E illustrate steps for terminating a multi-fiber cable with LC connector sub-assemblies and deploying the fibers of the multi-fiber cable;

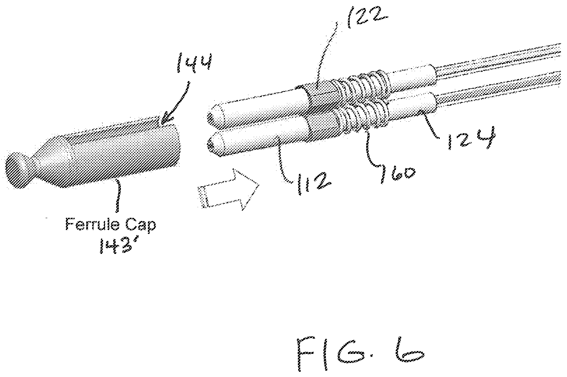

FIG. 6 illustrates an LC duo connector cap and two nestled LC connector sub-assemblies.
FIGS. 7A-7F illustrate steps for assembling LC connectors on each of the LC connector sub-assemblies.

### DETAILED DESCRIPTION OF EMBODIMENTS

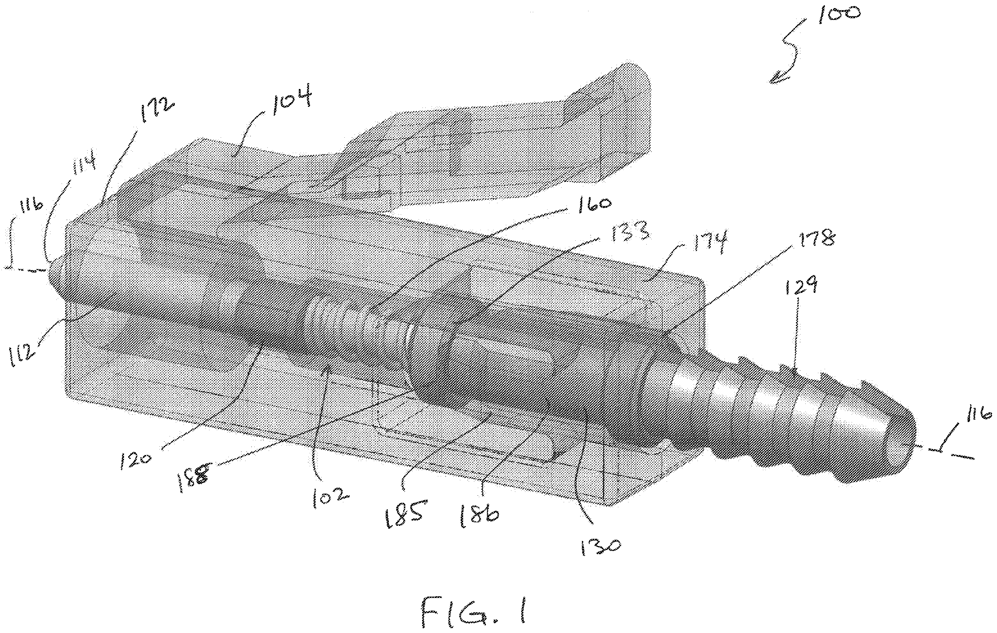

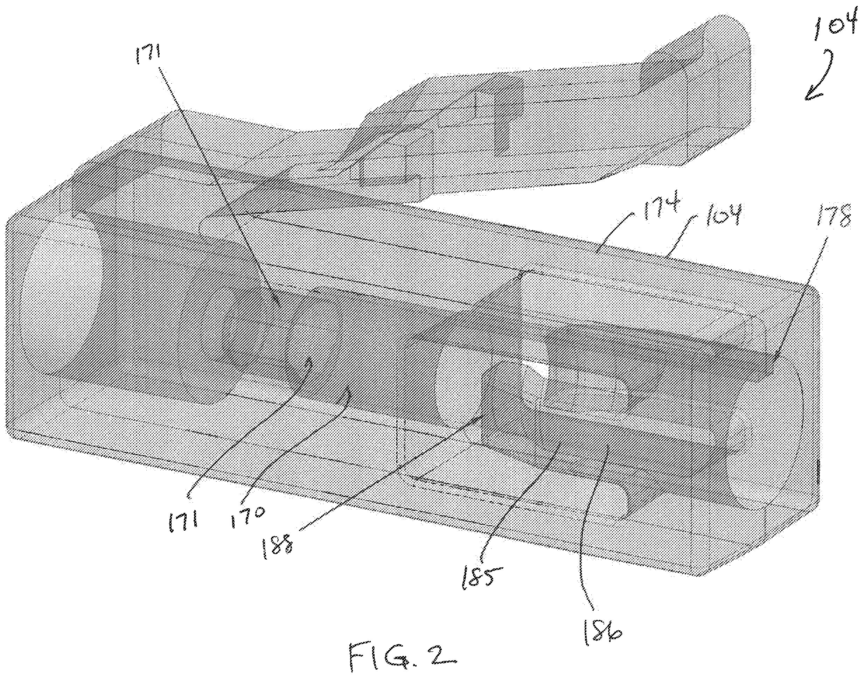

FIGS. 1 and 2 illustrates an exemplary LC connector 100 in accordance with various aspects of the disclosure. The LC connector 100 includes a connector sub-assembly 102 and an outer housing 104. The outer housing 104 is an LC housing configured to be received by a conventional matching LC receptacle. That is, the outer housing 104 is configured to provide LC-style push/pull engagement/disengagement with a mating optical fiber socket (not shown). The connector 100 is configured to be coupled with a fiber optic cable 106 (FIGS. 5G and 5H). For example, an end of the cable 106 is configured to be terminated with the connector sub-assembly 102.

The connector sub-assembly 102 includes an elongate cylindrical optical fiber ferrule 112 having at one end a termination end 114. In this example, the ferrule 112 is of a ceramic material, although other materials may be used, as is known in the art. The ferrule 112 has an axis 116 that extends centrally through the LC connector 100. The person skilled in the art will recognize this as a conventional arrangement, in which the fiber is terminated at the ferrule termination end 114, which is polished to minimize insertion loss when the connector is joined to a matching optical fiber socket (not shown).

The connector sub-assembly 102 also includes a ferrule basket 120, a generally cylindrical retaining member 130, and a boot 138. The ferrule basket 120 has a base portion 122 in which the ferrule 112 is seated and a cylindrical stem portion 124 that extends from the base portion 122 in an axial direction away from the ferrule 112. The base portion 122 includes an external annular shoulder 126. The base portion 122 is configured to receive the ferrule 112 in a press-fit relationship with a rear face of the ferrule abutting a forward face of an internal annular surface of the ferrule basket 120, as would be understood by persons skilled in the art. The boot 138 is configured to provide strain relief for the cable 106 and a weather resistant seal at the rearward end of the connector 100

The retaining member 130 includes a forward end portion 132 and a rearward end portion 134. The forward end portion 132 includes an external shoulder portion 133 defining a rearward facing surface. The forward end portion 132 includes an axial bore configured to receive at least a portion of the cylindrical stem portion 124 of the ferrule basket 120. The rearward end portion 134 includes an axial bore configured to receive the fiber optic cable 106, including a sheath 107 that protects the fiber. An outer surface of the rearward end portion 134 includes one or more barbs 136 for engagement with an internal surface of the boot 138.

The connector sub-assembly 102 further includes a coil spring 160 disposed between the external annular shoulder 126 of the base portion 122 and a forward end of the retaining member 130. The coil spring 160 biases the ferrule basket 120 forwardly relative to the retaining member 130. The coil spring 160 is compressible in the axial direction by axial sliding movement of the stem portion 124 relative to the retaining member 130. The axial range of travel of the ferrule basket 120 is limited by the compressed coil spring 160. The connector 100 may further include a removable protective cap 162 having a bore configured to receive the ferrule 112.

The outer housing 104 is configured in a substantially square shape with a release lever 108 projecting outward from a top wall 174 of the outer housing 104, as is typical with conventional LC connectors. The outer housing 104 includes a through bore 170 configured to receive the connector sub-assembly 102 such that the ferrule 112 can be exposed at a front end 172 of the outer housing 104. The inner surface of the top wall 174 of the outer housing 104 includes an alignment rib 178. The alignment rib 178 is configured to be received by an axial alignment channel 129 in the top wall of the retaining member 130 and extending the length of the retaining member 130.

The outer housing 104 further includes side walls 184 having resilient fingers 185 extending inward into the through bore 170. Each of the resilient fingers 185 is cantilevered at its rear end 186, and the free forward end 188 of each finger 185 is configured to engage the retaining member 130 at a position rearward of the rearward facing surface of the external shoulder portion 133 of the forward end portion 132 of the retaining member 130 when the retaining member 130 is inserted into the outer housing 104 to couple the housing 104 with the sub-assembly 102.

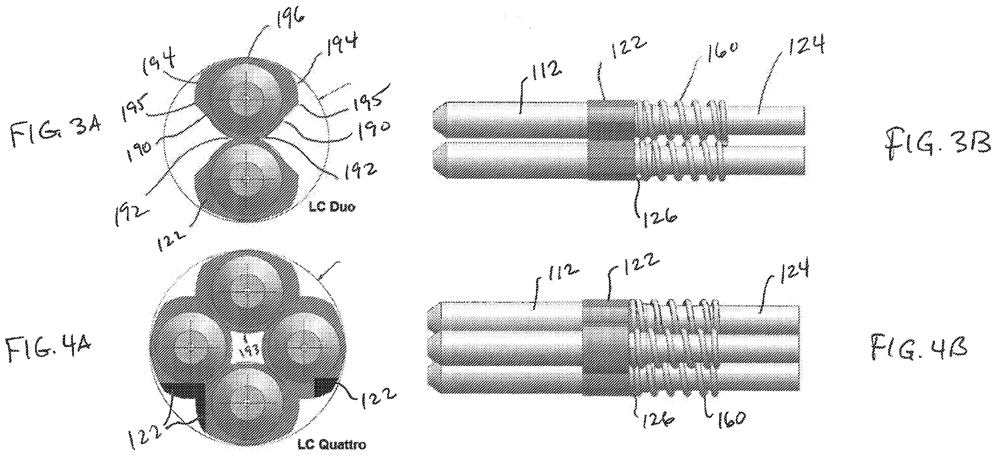

Referring now to FIGS. 3A and 4A, a cross-sectional shape of the base portion 122 of the ferrule basket 120 of the LC connector sub-assembly 102 is illustrated. As shown, an outer periphery of the base portion 122 includes two flat portions 190 arranged at a right angle relative to one another. Ends 192 of the two flat portions 190 that are nearest to one another along the periphery of the base portion are connected by a curved bottom portion 193. Two side curved portions 194 extend from the ends 195 of the two flat portions 190 that are furthest from one another along the periphery of the base portion 122. A top curved portion 196 connects the two side curved portions 194. A portion 171 of the through bore of the outer housing 104 of the LC connector 100 includes has a shape that is complementary to the aforementioned shape of the outer periphery of the base portion 122 of the ferrule basket 120 in order to provide a keyed interface between the ferrule basket 120 and the outer housing 104. The keyed interface ensures relative alignment between the ferrule basket 120 and the outer housing 104 and prevents relative rotation between the ferrule basket 120 and the outer housing 104.

As shown in FIGS. 3A and 3B, when a multi-fiber cable having two fibers terminated with LC connector sub-assemblies 102 are positioned with the bottom curved portions 193 of each of the two base portions 122 adjacent to and facing one another, the outer footprint of the cross-sectional profile of the two side-by-side base portions 122 falls within a circle having a diameter that is only slightly larger than a combined dimension of the diameters of the two ferrules 112.

Similarly, as shown in FIGS. 4A and 4B, when a multi-fiber cable having four fibers terminated with LC connector sub-assemblies 102 are positioned with the flat portions 190 of adjacent base portions 122 contacting one another and with the bottom curved portions 193 of each of the four base portions 122 facing a centerpoint between the four base portions 122, an opening is formed between the four bottom curved portions 193. However, the outer footprint of the cross-sectional profile of the four circumferentially-arranged base portions 122 falls within a circle having a diameter that is only about 25% larger than a combined dimension of the diameters of the two ferrules 112.

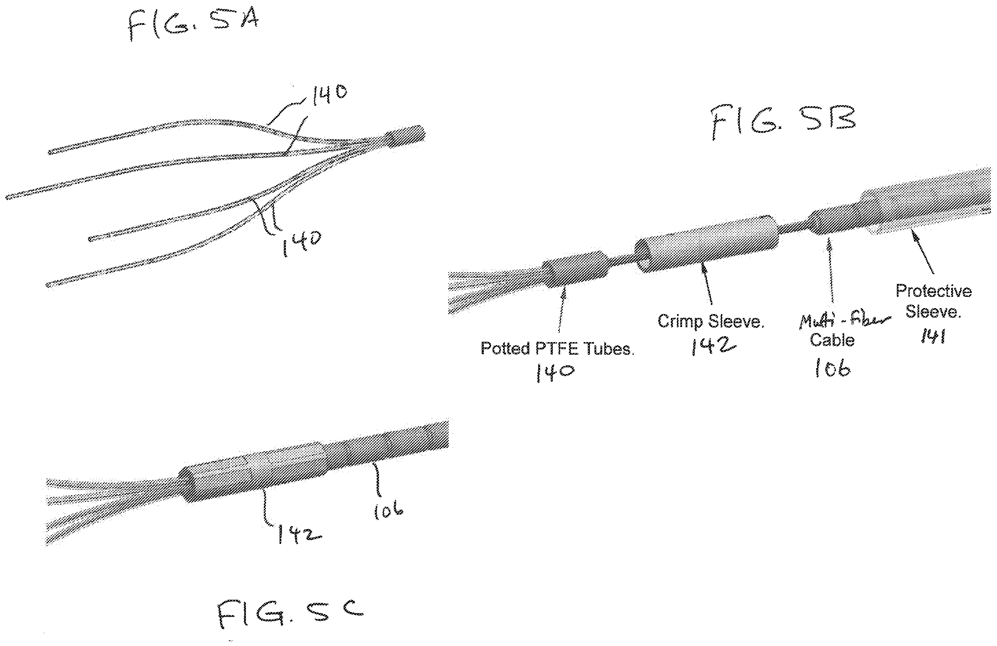

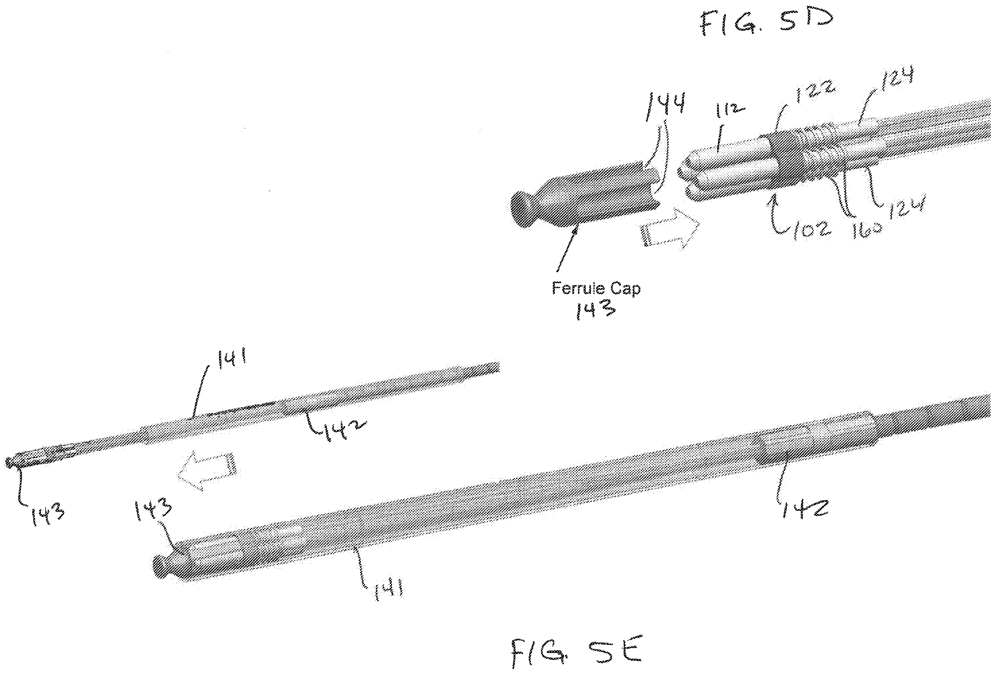

Referring now to FIGS. 5A-5E, termination of a multi-fiber drop cable, for example, an LC quattro drop cable is described. First, four PTFE tubes 140 are potted, as shown in FIG. 5A. Next, as shown in FIG. 5B, a protective sleeve 141 is slid over the tubes 140 and the multi-fiber cable, four fibers from the multi-fiber cable are fed through the tubes 140, and a crimp sleeve 142 is slid over the potted tubes 140. As shown in FIG. 5C, the crimp sleeve 142 is crimped into two places - onto the multi-fiber cable and onto the potted tubes. Each of the fibers is then terminated with an LC connector sub-assembly 102 and the four sub-assemblies 102 are arranged in the configuration shown in FIGS. 4A and 4B, as discussed above. As shown in FIG. 5D, a ferrule cap 143 having four channels 144 sized and arranged to receive the four LC connector sub-assemblies 102 in the nestled configuration of FIGS. 4A and 4B is attached to the sub-assemblies 102. Then, as shown in FIG. 5E, the protective sleeve 141 is slid in a forward direction over the four LC connector sub-assemblies 102 and onto the ferrule cap 143. The nestled LC connector sub-assemblies 102 can then be deployed through a duct to a desired location while be protected by the sleeve 141 and occupying a minimal cross-sectional footprint. If the multi-fiber cable includes two fibers terminated with two LC connector sub-assemblies 102, a ferrule cap 143' having two channels 144 sized and arranged to receive the two LC connector sub-assemblies 102 in the side-by-side configuration of FIGS. 3A and 3B is attached to the sub-assemblies 102.

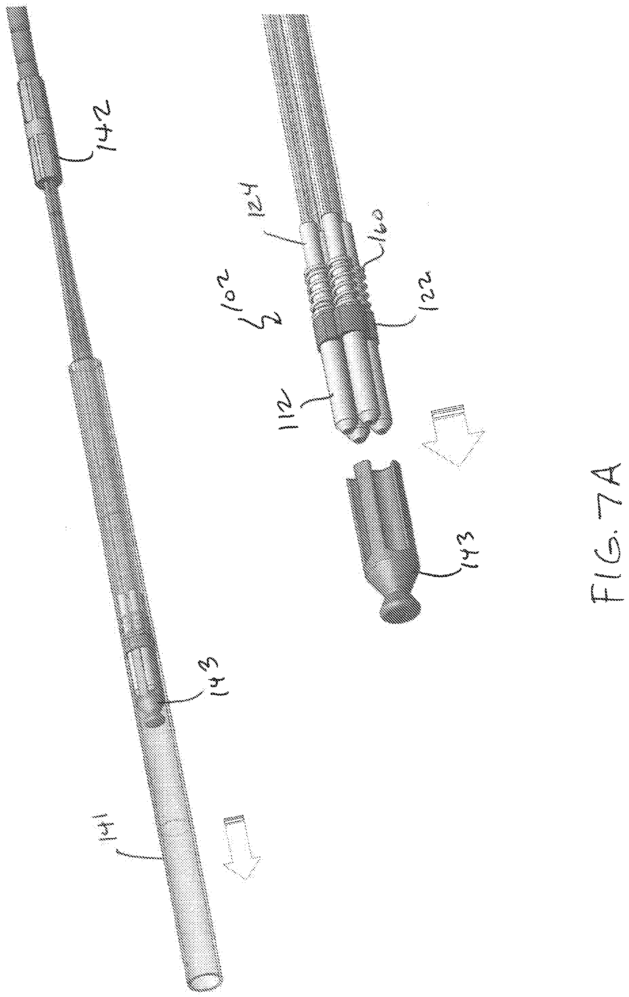

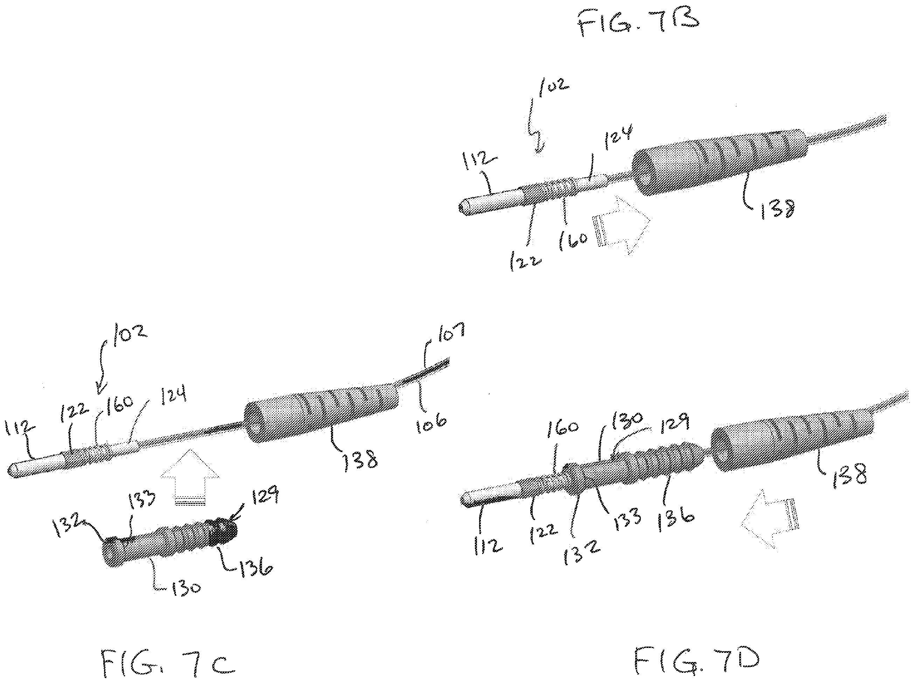

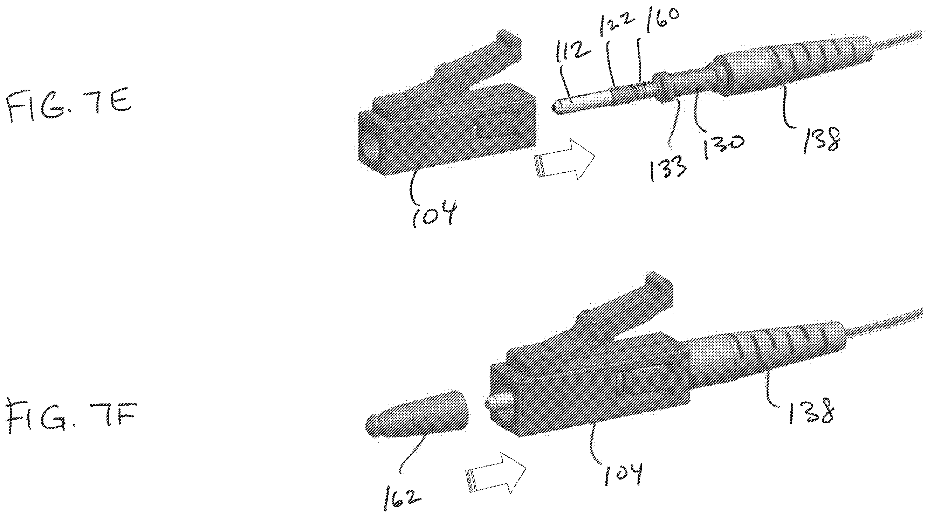

Referring now to FIGS. 7A-7F, assembly of the LC connector 100 is described. After the LC connector sub-assemblies 102 (e.g., two or four) are deployed to a desired location, the protective sleeve 141 and the ferrule cap 143, 143' are removed, as shown in FIG. 7A. The fiber optic pigtails terminated with LC connector sub-assemblies 102 are then separated, and boots 138 are slid over each of the sub-assemblies 102 such that the boot 138 is spaced rearward from a rearward end of the stem portion 124 of the ferrule basket 120, as shown in FIG. 7B. As shown in FIG. 7C, each fiber is slid through the axial alignment channel 129 in the top wall of the retaining member 130 to a position along a center axis of the retaining member 130. The boot 138 is then slid in a forward direction over a rearward end of the retaining member 130 such that the one or more barbs 136 engage the internal surface of the boot 138, as shown in FIG. 7D. As shown in FIG. 7E, the outer housing 104 is pushed onto the LC connector sub-assembly 102 until the fingers 185 engage the retaining member 130 at a position rearward of the rearward facing surface of the external shoulder portion 133 of the forward end portion 132 of the retaining member 130. The dust cap 162 may be inserted into a forward opening of the outer housing 103 to protect the ferrule 112, as shown in FIG. 7F.

It should be appreciated that although the outer housing 104 is illustrated as transparent to facilitate an understanding of the connector, the outer housing is not typically transparent.

Additional embodiments include any one of the embodiments described above, where one or more of its components, functionalities or structures is interchanged with, replaced by or augmented by one or more of the components, functionalities, or structures of a different embodiment described above.

It should be understood that various changes and modifications to the embodiments described herein will be apparent to those skilled in the art. Such changes and modifications can be made without departing from the scope of the present disclosure and without diminishing its intended advantages. It is therefore intended that such changes and modifications be covered by the appended claims.

Although several embodiments of the disclosure have been disclosed in the foregoing specification, it is understood by those skilled in the art that many modifications and other embodiments of the disclosure will come to mind to which the disclosure pertains, having the benefit of the teaching presented in the foregoing description and associated drawings. It is thus understood that the disclosure is not limited to the specific embodiments disclosed herein above, and that many modifications and other embodiments are intended to be included within the scope of the appended claims.

## Claims

1. A multi-fiber drop cable, wherein the multi-fiber drop cable includes a plurality of optical fibers terminated with an optical fiber connector sub-assembly (102) for an optical fiber connector (100), said optical fiber connector sub-assembly (102) comprising:
a ferrule (112) configured to hold an optical fiber therein along an axis of the connector (100);
a ferrule basket (120) configured to hold the ferrule (112) at a front portion of the connector (100);
a retaining member (130) having a front end portion configured to hold the ferrule basket (120) and a rear end portion configured to receive a fiber optic cable (106); and
a boot (138) configured to be coupled with the retaining member (130),
wherein the ferrule basket (120) includes a base portion (122) and a stem portion (124) that extend rearward from the base portion (122),
**characterised in that**
an outer periphery of the base portion (122) includes two flat portions (190) arranged at a right angle relative to one another, first ends of the two flat portions (190) that are nearest to one another along the outer periphery of the base portion (122) are connected to one another by a curved bottom portion (193), and
two side curved portions (194) extend from second ends of the two flat portions (190) that are furthest from one another along the outer periphery of the base portion (122), and top curved portion (196) connects the two side curved portions (194),
the multi-fiber cable includes four optical fibers terminated with the connector sub-assembly (102) and when
the four base portions (122) are circumferentially arranged with the flat portions (190) of adj acent base portions (122) contacting one another and with the bottom curved portions (193) of the four base portions (122) facing a centerpoint between the four base portions (122), an opening is formed between the four bottom curved portions (193), and
an outer footprint of a cross-sectional profile of the four circumferentially-arranged base portions (122) falls within a circle having a diameter that is about 25% larger than a combined dimension of the diameters of two ferrules (112).

2. The multi-fiber drop cable of claim 1, wherein the sub-assembly (102) is an LC connector sub-assembly.

3. The multi-fiber drop cable of claim 2, further comprising
an LC connector outer housing (104) configured to be coupled with the optical fiber connector sub-assembly (102),
wherein the outer housing (104) is configured to provide push/pull engagement/disengagement with a mating optical fiber socket.

4. The multi-fiber cable of claim 3, wherein the outer housing (104) includes a through bore (170) having a portion that has a shape that is complementary to a shape of the outer periphery of the base portion (122) of the ferrule basket (120) in order to provide a keyed interface between the ferrule basket (120) and the outer housing (104).

5. The the multi-fiber cable of claim 4, wherein the keyed interface is configured to facilitate relative alignment between the ferrule basket (120) and the outer housing (104), and
wherein the keyed interface prevents relative rotation between the ferrule basket (120) and the outer housing (104).

## Patentansprüche

1. Multifaser-Verbindungskabel, wobei das Multifaser-Verbindungskabel eine Mehrzahl optischer Fasern umfasst, welche mit einer optische Faser-Verbindungseinheit-Unteranordnung (102) für eine optische Faser-Verbindungseinheit (100) abgeschlossen sind, wobei die optische Faser-Verbindungseinheit-Unteranordnung (102) umfasst:
eine Hülse (112), welche dazu eingerichtet ist, darin eine optische Faser entlang einer Achse der Verbindungseinheit (100) zu halten;
einen Hülsenkorb (120), welcher dazu eingerichtet ist, die Hülse (112) an einem vorderen Abschnitt der Verbindungseinheit (100) zu halten;
ein Rückhalteelement (130), welches einen vorderen Endabschnitt, welcher dazu eingerichtet ist, den Hülsenkorb (120) zu halten, und einen hinteren Endabschnitt aufweist, welcher dazu eingerichtet ist, ein optisches Faserkabel (106) aufzunehmen; und
eine Schutzmanschette (138), welche dazu eingerichtet ist, mit dem Rückhalteelement (130) gekoppelt zu sein,
wobei der Hülsenkorb (120) einen Basisabschnitt (122) und einen Stammabschnitt (124) umfasst, welcher sich von dem Basisabschnitt (122) nach hinten erstreckt,
**dadurch gekennzeichnet, dass**
ein äußerer Umfang des Basisabschnitts (122) zwei flache Abschnitte (190) umfasst, welche mit einem rechten Winkel relativ zueinander angeordnet sind, wobei erste Enden der zwei flachen Abschnitte (190), welche entlang des äußeren Umfangs des Basisabschnitts (122) am nächsten zueinander sind, miteinander durch einen gekrümmten Bodenabschnitt (193) verbunden sind, und
sich zwei gekrümmte Seitenabschnitte (194) von zweiten Enden der zwei flachen Abschnitte (190) erstrecken, welche entlang des äußeren Umfangs des Basisabschnitts (122) am weitesten voneinander sind, und wobei ein gekrümmter Deckelabschnitt (196) die zwei gekrümmten Seitenabschnitte (194) verbindet,
das Multifaser-Kabel vier optische Fasern umfasst, welche mit der Verbindungseinheit-Unteranordnung (102) abgeschlossen sind, und, wenn die vier Basisabschnitte (122) umfänglich angeordnet sind, mit den flachen Abschnitten (190) benachbarter Basisabschnitte (122), welche einander kontaktieren, und mit den gekrümmten Bodenabschnitten (193) der vier Basisabschnitte (122), welche einem Mittelpunkt zwischen den vier Basisabschnitten (122) zugewandt sind, umlaufend angeordnet sind, eine Öffnung zwischen den vier gekrümmten Bodenabschnitten (193) gebildet ist, und
eine äußere Standfläche eines Querschnittsprofils der vier umlaufend angeordneten Basisabschnitte (122) innerhalb eines Kreises liegt, welcher einen Durchmesser aufweist, welcher ungefähr 25 % größer als ein kombiniertes Ausmaß der Durchmesser zweier Hülsen (112) ist.

2. Multifaser-Verbindungskabel nach Anspruch 1, wobei die Unteranordnung (102) eine LC-Verbindungseinheit-Unteranordnung ist.

3. Multifaser-Verbindungskabel nach Anspruch 2, ferner umfassend ein LC-Verbindungseinheit-Außengehäuse (104), welches dazu eingerichtet ist, mit der optische Faser-Verbindungseinheit-Unteranordnung (102) gekoppelt zu sein,
wobei das Außengehäuse (104) dazu eingerichtet ist, ein Drücken/Ziehen-Eingriff/Lösen mit einer entsprechenden optischen Faserbuchse bereitzustellen.

4. Multifaser-Verbindungskabel nach Anspruch 3, wobei das Außengehäuse (104) eine Durchgangsbohrung (170) umfasst, welche einen Abschnitt aufweist, welcher eine Form aufweist, welche komplementär zu einer Form des äußeren Umfangs des Basisabschnitts (122) des Hülsenkorbs (120) ist, um eine formschlüssige Schnittstelle zwischen dem Hülsenkorb (120) und dem Außengehäuse (104) bereitzustellen.

5. Multifaser-Verbindungskabel nach Anspruch 4, wobei die formschlüssige Schnittstelle dazu eingerichtet ist, eine relative Ausrichtung zwischen dem Hülsenkorb (120) und dem Außengehäuse (104) zu vereinfachen, und
wobei die formschlüssige Schnittstelle eine relative Rotation zwischen dem Hülsenkorb (120) und dem Außengehäuse (104) verhindert.

## Revendications

1. Câble de descente multifibre dans lequel le câble de descente multifibre comprend une pluralité de fibres optiques terminées par un sous-ensemble connecteur de fibre optique (102) pour un connecteur de fibre optique (100), ledit sous-ensemble connecteur de fibre optique (102) comprenant :
une ferrule (112) configurée pour maintenir une fibre optique à l'intérieur le long d'un axe du connecteur (100) ;
un panier de ferrule (120) configuré pour maintenir la ferrule (112) au niveau d'une portion avant du connecteur (100) ;
un élément de retenue (130) ayant une partie d'extrémité avant configurée pour maintenir le panier de ferrule (120) et une portion d'extrémité arrière configurée pour recevoir un câble de fibre optique (106) ; et
une botte (138) configurée pour être accouplée à l'élément de retenue (130),
dans lequel le panier de ferrule (120) inclut une portion de base (122) et une portion tige (124) qui s'étendent vers l'arrière depuis la portion de base (122). **caractérisé en ce que**
une périphérie externe de la portion de base (122) inclut deux portions plates (190) agencées sous un angle droit l'une par rapport à l'autre, de premières extrémités des deux parties plates (190) qui sont les plus proches l'une de l'autre le long de la périphérie extérieure de la partie de base (122) sont connectées l'une à l'autre par une portion inférieure incurvée (193), et
deux portions latérales incurvées (194) s'étendent depuis de secondes extrémités des deux portions plates (190) qui sont les plus éloignées l'une de l'autre le long de la périphérie externe de la portion de base (122), et la portion supérieure incurvée (196) raccorde les deux portions latérales incurvées (194),
le cable multifibre inclut quatre fibres optiques terminées par le sous-ensemble connecteur (102) et lorsque les quatre portions de base (122) sont agencées circonférentiellement, avec les portions plates (190) de portions de base adjacentes (122) entrant en contact l'une avec l'autre et avec les portions inférieures incurvées (193) des quatres portions de base (122) faisant face à un point central entre les quatre portions de base (122), une ouverture est formée entre les quatre portions incurvées inférieures (193), et une empreinte extérieure d'un profil de section transversale des quatre portions de base (122) agencées circonférentiellement tombe à l'intérieur d'un cercle dont le diamètre est environ 25% plus grand qu'une dimension combinée des diamètres de deux ferrules (112).

2. Câble de descente multifibre selon la revendication 1, dans lequel le sous-ensemble (102) est un sous-ensemble connecteur LC.

3. Câble de descente multifibre selon la revendication 2, comprenant en outre un logement externe de connecteur LC (104) configuré pour être accouplé au sous-ensemble connecteur de fibre optique (102),
dans lequel le logement externe (104) est configuré pour fournir un engagement/désengagement par poussée/traction avec une prise de fibre optique correspondante.

4. Câble multifibre selon la revendication 3, dans lequel le logement externe (104) inclut un alésage traversant (170) ayant une portion qui présente une forme complémentaire d'une forme de la périphérie externe de la portion de base (122) du panier de ferrule (120) afin de fournir une interface clavetée entre le panier de ferrule (120) et le logement externe (104).

5. Câble multifibre selon la revendication 4, dans lequel l'interface clavetée est configurée pour faciliter un alignement relatif entre le panier de ferrule (120) et le logement externe (104), et
dans lequel l'interface clavetée empêche une rotation relative entre le panier de ferrule (120) et le logement externe (104).
